# EUROPÄISCHE PATENTSCHRIFT

(11) **EP 0 980 981 B1**
(45) Veröffentlichungstag und Bekanntmachung des Hinweises auf die Patenterteilung: **26.11.2003**
(21) Anmeldenummer: 99114736.4
(22) Anmeldetag: 28.07.1999
(51) Int. Cl.: F15B 1/22, F15B 1/10, B60T 8/40

(54) **Druckmittelspeicher**
Fluid pressure accumulator
Accumulateur de pression à fluide

(30) Priorität: 17.08.1998 DE 19837208; 12.03.1999 DE 19911030
(43) Veröffentlichungstag der Anmeldung: 23.02.2000
(73) Patentinhaber: Continental Teves AG & Co. oHG, 60488 Frankfurt (DE)
(72) Erfinder: Beck, Erhard, 35781 Weilburg (DE); Volz, Peter, 64291 Darmstadt (DE)

(56) Entgegenhaltungen:
- DE-A- 1 425 538
- DE-A- 3 901 261
- PATENT ABSTRACTS OF JAPAN vol. 098, no. 005, 30. April 1998 (1998-04-30) & JP 10 019001 A (NHK SPRING), 20. Januar 1998 (1998-01-20)
- PATENT ABSTRACTS OF JAPAN vol. 098, no. 006, 30. April 1998 (1998-04-30) & JP 10 054402 A (NHK SPRING), 24. Februar 1998 (1998-02-24)

## Beschreibung

Die Erfindung betrifft einen Druckmittelspeicher, insbesondere für schlupfgeregelte Kraftfahrzeugbremsanlagen nach dem Oberbegriff des Patentanspruchs 1.

Hydrospeicher weisen in der Regel elastomere Dichtelemente auf, wobei durch eine Bauart des Druckmittelspeichers als Kolbenspeicher (vgl. hierzu DE 41 41 929 A1) oder als Membranspeicher (vgl. hierzu DE 41 31 524 A1) in Abhängigkeit des Partialdrucks das im Druckmittelspeicher häufig unter hohem Druck stehende Gas über die Dichtung bzw. Membran in die Bremsflüssigkeit diffundiert. Daher muß bei diesen Druckmittelspeichern das Gasvolumen entsprechend an die zu erwartenden Diffusion angepaßt werden. Daher ist es gerade bei Verwendung eines solchen Druckmittelspeichers für Kraftfahrzeugbremsanlagen notwendig, daß das Gas wieder aus der Bremsflüssigkeit entweichen kann, um eine Betriebsstörung der Bremse zu verhindern.

Aus der gattungsbildenden DE 19706427 A ist bereits ein Druckmittelspeicher bekannt geworden, dessen Faltenbalg ein an einer Feder befestigtes Ventilelement aufnimmt, welches in der Grundstellung einen in das Gehäuse des Speichers einmündenden Flüssigkeitsanschluß freigibt. Sinkt der auf dem Faltenbalg lastende Flüssigkeitsdruck gegenüber dem Gasdruck im Faltenbalg , so verschließt das Ventilelement den Druckmittelanschluß. Je stärker der Druck der Bremsflüssigkeit in der Kammer bzw. am Druckmittelanschluß des Bremssystems abfällt, umso stärker ist die Dichtwirkung des Ventilelementes am Ventilsitz des Druckmittelanschlusses aufgrund der erhöhten Flächenpressung. Dies hat den Nachteil, daß das Ventilelement einer relativ hohen mechanischen Beanspruchung ausgesetzt ist, wobei mit zunehmender Bremsflüssigkeitslekkage der Schließdruck des Ventilelementes durch den Gasdruck des Faltenbalgs soweit erhöht ist, daß das Ventilelement nicht mehr zu öffnen vermag.

Daher ist es die Aufgabe der Erfindung, einen Druckmittelspeicher der eingangs genannten Art mit einfachen, kostengünstigen und funktionssicheren Mitteln derart zu verbessern, daß vorgenannte Nachteile vermieden werden.

Diese Aufgabe wird erfindungsgemäß durch die kennzeichnenden Merkmale des Patentanspruchs 1 gelöst.

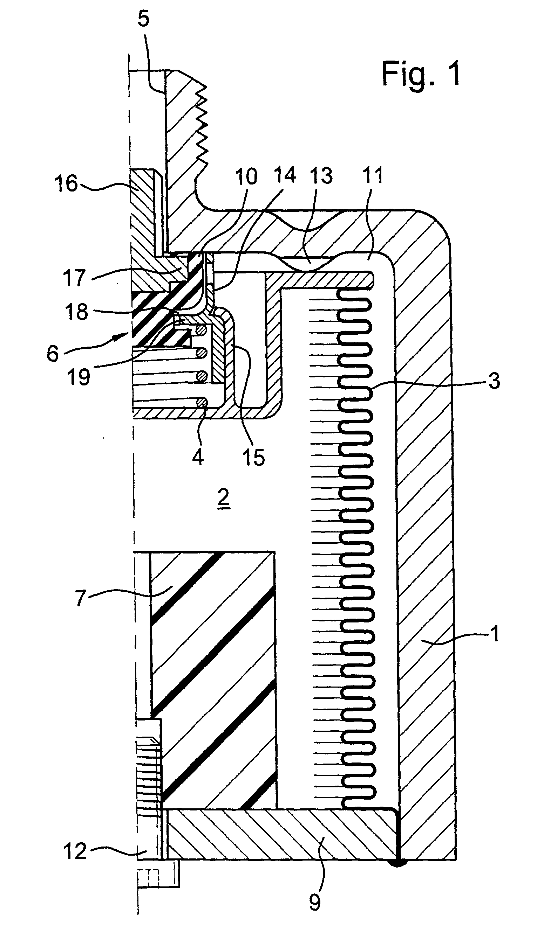

Weitere Merkmale, Vorteile und Anwendungsmöglichkeiten der Erfindung gehen im nachfolgenden aus den Unteransprüchen und aus der Beschreibung eines konstruktiven Ausführungsbeispieles nach Figur 1 hervor.

Die Fig. 1 zeigt in erheblich vergrößertem Maßstab skizziert einen Druckmittelspeicher im Längsschnitt, der insbesondere für schlupfgeregelte Kraftfahrzeugbremsanlagen verwendet werden kann. Hierzu weist das topfförmige Gehäuse 1 einen mit der Bremsanlage in Verbindung bringbaren Druckmittelanschluß 5 auf. Im Gehäuse 1 des Druckmittelspeichers befindet sich ein Faltenbalg 3, der eine Kammer 2 umschließt, die mit einem in der Regel unter hohem Druck stehenden Gas befüllt ist. Damit das Gas nicht über die Wandung des Faltenbalges 3 aus seiner Kammer 2 in eine außerhalb des Faltenbalges 3 gelegene, über den Druckmittelanschluß 5 mit der Bremsanlage in Verbindung stehende Kammer 11 gelangen kann, wird bei der Gestaltung des Faltenbalges 3 bewußt auf elastomere Bauelemente verzichtet und dementsprechend ausschließlich Metall für die Herstellung des Faltenbalges 3 verwendet. An der Stirnfläche des topfförmigen Faltenbalges 3 ist ein Federelement 4 befestigt, das ein dem Druckmittelanschluß 5 zugewandtes Ventilelement 6 trägt.

Ferner befindet sich wahlweise innerhalb des Faltenbalges 3 ein vorzugsweise aus Kunststoff bestehender Innenkörper 7, dessen Dimensionierung die Druckaufnahmecharakteristik des Druckmittelspeichers bestimmt und gleichzeitig als Anschlag für die Stirnfläche des Faltenbalges 3 genutzt werden kann.

Der topfförmige Faltenbalg 3 ist mit seinem offenen Endbereich zwischen dem topfförmigen Gehäuse 1 und dem als Deckel ausgebildeten Verschlußelement 9 eingespannt sowie dazwischen abgedichtet. Durch das deckelförmige Verschlußelement 9 erstreckt sich ein kanalförmiger Füllanschluß 8, der vorzugsweise durch den das Speicherverhalten charakterisierenden Innenkörper 7 in die vom Faltenbalg 3 umschlossene Kammer 2 einmündet. Abbildungsgemäß ist dieser für das Gas vorgesehene Füllanschluß 8 mittels einer Dichtschraube 12 verschlossen, die gleichzeitig den zylinderförmigen Innenkörper 7 am deckelförmigen Verschlußelement 9 teilweise durchdringt. Sowohl das Gehäuse 1 als auch der Faltenbalg 3 sind vorzugsweise durch ein Tiefziehverfahren zu der abbildungsgemäßen Topfform ausgestaltet, wobei bezüglich der Mantelfläche des Faltenbalges 3 die Wellenkontur zur Herstellung des Balgs mittels eines Formpreßverfahrens zustande kommt. Das am Federelement 4 befestigte Ventilelement 6 ist vorzugsweise mit einem vulkanisierten Dichtelement 10 versehen, wodurch sich eine besonders einfache und sichere Abdichtung der Kammer 11 gegenüber dem Druckmittelanschluß 5 im Gehäuse 1 ergibt.

Die Erfindung läßt sich im einzelnen durch die Darstellung der nachfolgenden Merkmale charakterisieren:

Zwischen der Stirnfläche des Faltenbalgs 3 und der Stirnfläche des Gehäuses 1 ist ein Anschlag 13 vorgesehen, der den Schließhub des Ventilelementes 6 in Richtung des Druckmittelanschlusses 5 begrenzt. Das Ventilelement 6 ist hierzu gegenüber dem Federelement 4 relativ beweglich angeordnet, so daß es sich optimal zur Dichtfläche am Druckmittelamschluß 5 ausrichten kann und auch durch den im Druckmittelanschluß 5 einleitbaren Fülldruck der Flüssigkeit in Richtung der Kammer 11 aufgestoßen werden kann. Ein Schiefdrucken des Ventilelementes 6 infolge Faltenbalg entfällt gleichfalls. Das Ventilelement 6 ist folglich nur dem hydraulischen Druck der Flüssigkeit ausgesetzt, da die vom Faltenbalg 3 ausgeübte Kraftwirkung durch den Anschlag 13 und infolge einer nachfolgend noch dargestellten Fesselung des Federelementes 4 quasi um das Ventilelement 6 herumgeführt wird. Das bedeutet zugleich, daß das Ventilelement 6 hinsichtlich seiner Funktion vom Federelement 4 weitgehend entkoppelt ist.

Die Stirnfläche des Faltenbalgs 3 ist hierzu in einer vorteilhaften Ausführungsform des Druckmittelspeichers in Richtung des Druckmittelanschlusses 5 mit einem hülsenförmigen Fortsatz 15 versehen. Darin befindet sich der teleskopartig bewegbare, als Schiebehülse ausgeführte Aufnahmekörper 14, der das Federelement 4 und das Ventilelement 6 in koaxialer Ausrichtung zum Druckmittelanschluß 5 aufnimmt.
Das Federelement 4 ist zwischen einem auf das Ventilelement 6 gerichteten Vorsprung 19 des Aufnahmekörpers 14 und der Stirnfläche des Faltenbalgs 3 eingespannt. Der Vorsprung 19 befindet sich etwa auf der halben Länge des hülsenförmigen Aufnahmekörpers 14, der auf der Höhe des Vorsprungs 19 eine Außenschulter aufweist, die sich unter der Wirkung des Federelementes 4 an einem als Formschlußverbindung angestauchten Endabschnitt des Fortsatzes 15 abstützt. Der Vorsprung 19 bildet einerseits eine Abstützung für das Federelement 4, andererseits erstreckt er sich als Ventilträger in Radialrichtung spielbehaftet bis in eine Ringnut 18 des Ventilelementes 6. Das Ventilelement 6 wird somit innerhalb des Fortsatzes 15 in Axial- und auch Radialrichtung spielbehaftet aufgenommen, so daß es mit dem Faltenbalg 3 eine vorprüfbare, eigenständig handhabbare Unterbaugruppe bildet.

In der abbildungsgemäßen Ventilschließstellung liegt das als Sitzventil ausgebildete Ventilelement 6 mit seinem Bund 17 an der Innenwandung des Gehäuses 1 an, während sich zugleich ein dem Bund 17 vorgeordneter, mit Strömungsnuten versehener metallischer Tauchkolben 16 in die Bohrung des Druckmittelanschlusses 5 erstreckt. Der Bund 17 übernimmt hierbei eine Stütz- und Anschlagfunktion für das Dichtelement 10, so daß es nur einer sehr geringen Beanspruchung unterliegt. Der Bund 17 ist mit einem Dichtelement 10 umspritzt, das einerseits zur Bildung einer Ventildichtfläche am Bund 17 in Richtung des Druckmittelanschlusses 5 geringfügig übersteht, andererseits entfernt zur Ventildichtfläche zum formschlüssigen Eingriff des Vorsprungs 19 zu einer Ringnut 18 entsprechend ausgeformt ist. Im vorliegendem Beispiel ist also die Ringnut 18 unmittelbar in das Dichtelement 10 eingearbeitet, in die der Vorsprung 19 des hülsenförmigen Aufnahmekörpers 14 spielbehaftet eingreift. Es ist aber auch möglich, bei entsprechender Ausgestaltung des Ventilelementes 6 die Ringnut 18 in einem entsprechend geformten Endabschnitt des Tauchkolbens 16 einzubringen.

Die vorzugsweise durch ein Tiefziehverfahren topfförmig gestaltete Stirnfläche des Faltenbalgs 3 berührt abbildungsgemäß den als Nase in das Gehäuse 1 eingeformten Anschlag 13, wenn die Ringfläche des Dichtelementes 10 gerade druckmittelsperrend an der Innenwandung des Gehäuses 1 anliegt. In dieser Sperrstellung kann das Ventilelement 6 jederzeit zur beaufschlagung der Kammer 11 mit Flüssigkeit aus Richtung des Druckmittelanschlusses 5 aufgestoßen werden, da es losgelöst von der Kraftwirkung des Faltenbalgs 3 zumindest in Axialrichtung im Aufnahmekörper 14 relativ beweglich geführt ist.

Schließlich soll nachfolgend kurz auf weitere konstruktive Ausgestaltungsvarianten eingegangen werden:

Das Verschlußelement 9 verbindet das Gehäuse 1 und den Faltenbalg 3 zu einer stabilen, einfach herzustellenden Einheit.

Das vorzugsweise als Tiefziehteil hergestellte topfförmige Gehäuse 1 kann im Bereich des Druckmittelanschlusses 5, der am Topfboden gelegen ist, relativ leicht mit einem Anschlußgewinde (Innen-/oder Außengewinde) versehen werden, wobei sich der Druckmittelspeicher auch als Einschraub- bzw. Anschraubspeicher an das angeschlossene System eignet.

Der Füllanschluß 8 bildet im Hinblick auf seine Konstruktion einen Standard- als auch Serienteil, insbesondere in der gezeigten Ausführungsform.

### Funktionsmerkmale:

Aufgrund der im Druckmittelspeicher maximal zulässigen Drucküberhöhung, muß für die Konstruktion des Faltenbalges 3 gewährleistet werden, daß der Flüssigkeitsdruck in der Kammer 11 immer größer als der Gasdruck in der Kammer 2 ist, damit außerhalb des Faltenbalges 3 die zulässige Drucküberhöhung eingehalten wird. Da dieser maximal zulässige Außenüberdruck bei einem einlagigen Faltenbalg bei ca. 40 bar liegt, wird der Druckmittelspeicher gleichzeitig sowohl über den Füllanschluß 8 mit Gas als auch über den Druckmittelanschluß 5 mit Druckmittel bzw. Bremsflüssigkeit befüllt.

Bei einem geringfügig über den Außenüberdruck erhöhten Gasdruck dehnt sich der Faltenbalg 3 aus und das Ventilelement 6 verschließt den Druckmittelanschluß 5, indem der mit dem Faltenbalg 3 mitbewegte hülsenförmige Aufnahmekörper 14 an der Innenwandung des Gehäuses 1 anstößt, von der Außenschulter des Fortsatzes 15 abhebt und sich teleskopartig unter der Kompression des Federelementes 4 auf die Stirnfläche des Faltenbalgs 3 zubewegt, bis sich die Stirnfläche des Faltenbalgs 3 beabstandet zur Innenwandung des Gehäuses 1 am Anschlag 13 abstützt.

Bei Wunsch oder Bedarf kann auf eine Gasbefüllung des Faltenbalges 3 verzichtet werden. Die Federsteifigkeit des Metallbalges und dessen Festigkeit erlauben dann die Darstellung eines sog. Mitteldruckspeichers anstelle eines Hochdruckspeichers.

Unabhängig davon, ob nunmehr der Erfindungsgegenstand als Hochdruck- oder Mitteldruckspeicher verwendet wird, ergeben sich für den Erfindungsgegenstand technische Vorteile, die insbesondere in der absoluten Dichtheit, Wartungsfreiheit infolge der verschleißfreien Betriebsweise und einfachen Konstruktion zu sehen sind. Ferner sind die produktionstechnischen Vorteile zu erwähnen, da keine Präzisionsteile und keine feinbearbeiteten Oberflächen notwendig sind.

### Bezugszeichenliste

- 1: Gehäuse
- 2: Kammer
- 3: Faltenbalg
- 4: Federelement
- 5: Druckmittelanschluß
- 6: Ventilelement
- 7: Innenkörper
- 8: Füllanschluß
- 9: Verschlußelement
- 10: Dichtelement
- 11: Kammer
- 12: Dichtschraube
- 13: Anschlag
- 14: Aufnahmekörper
- 15: Fortsatz
- 16: Tauchkolben
- 17: Bund
- 18: Ringnut
- 19: Vorsprung

## Patentansprüche

1. Druckmittelspeicher, insbesondere für schlupfgeregelte Kraftfahrzeugbremsanlagen, mit einem einen Druckmittelanschluß (5) aufweisenden Gehäuse (1), mit einem Ventilelement (6), das den Druckmittelanschluß (5) öffnet oder verschließt, mit einem an der Stirnfläche des Faltenbalges (3) befestigten Federelement (4), das mit dem dem Druckmittelanschluß (5) zugewandten Ventilelement (6) zusammenwirkt, mit einem im Gehäuse (1) beweglich angeordneten, mindestens zwei Kammern (2, 11) im Druckmittelspeicher voneinander trennenden Körper, der als im Gehäuse (1) beweglicher, die eine Kammer (2) umschließender Faltenbalg (3) ausgebildet ist, wobei die vom Faltenbalg (3) umschlossene Kammer (2) mit einem Gas befüllt ist, **gekennzeichnet durch** folgende Merkmale:
- zwischen der Stirnfläche des Faltenbalgs (3) und der Stirnfläche des Gehäuses (1) ist ein Anschlag (13) vorgesehen, der den Schließhub des Ventilelementes (6) in Richtung des Druckmittelanschlusses (5) begrenzt,
- das Ventilelement (6) ist gegenüber dem Federelement (4) relativ beweglich und spielbehaftet angeordnet.

2. Druckmittelspeicher nach Anspruch 1, **dadurch gekennzeichnet, daß** der Faltenbalg (3) aus einem Metall besteht, an dessen Stirnfläche ein teleskopartig bewegbarer Aufnahmekörper (14) angeordnet ist, der das Federelement (4) und das Ventilelement (6) in koaxialer Ausrichtung zum Druckmittelanschluß (5) aufnimmt.

3. Druckmittelspeicher nach Anspruch 1, **dadurch gekennzeichnet, daß** der Aufnahmekörper (14) vorzugsweise mittels eines auf den Druckmittelanschluß (5) gerichteten Fortsatzes (15) formschlüssig am Faltenbalg (3) gehalten ist.

4. Druckmittelspeicher nach einem der vorhergehenden Ansprüche, **dadurch gekennzeichnet, daß** das Federelement (4) zwischen dem Aufnahmekörper (14) und der Stirnfläche des Faltenbalgs (3) eingespannt ist.

5. Druckmittelspeicher nach einem der vorhergehenden Ansprüche, **dadurch gekennzeichnet, daß** das Ventilelement (6) im Aufnahmekörper (14) spielbehaftet geführt ist.

6. Druckmittelspeicher nach Anspruch 1, **dadurch gekennzeichnet, daß** das Gehäuse (1) als Tiefziehteil ausgebildet ist.

7. Druckmittelspeicher nach Anspruch 1, **dadurch gekennzeichnet, daß** das Ventilelement (6) als Sitzventil ausgebildet ist, das mit einem in der Ventilschließstellung an der Innenwandung des Gehäuses (1) anliegenden Bund (17) versehen ist und das einen in der Ventilschließstellung sich in die Bohrung des Druckmittelanschlusses (5) erstreckenden Tauchkolben (16) aufweist.

8. Druckmittelspeicher nach Anspruch 7, **dadurch gekennzeichnet, daß** der Bund (17) mit einem Dichtelement (10) überzogen ist, das eine Ringnut (18) aufweist, in der der hülsenförmige Aufnahmekörper (14) formschlüssig eingreift.

9. Druckmittelspeicher nach einem der vorhergehenden An sprüche, **dadurch gekennzeichnet, daß** der Faltenbalg (3) durch ein Tiefziehverfahren zu einer Topfform ausgestaltet ist, dessen Mantelfläche vorzugsweise durch Form pressen die Wellenkontur eines Faltenbalges (3) auf weist.

## Claims

1. Pressure fluid accumulator, in particular for slip-controlled motor vehicle brake systems, with a housing (1) including a pressure fluid connection (5), with a valve element (6) opening or closing the pressure fluid connection (5), with a spring element (4) attached to the end surface of a pleated bellows (3) and cooperating with the valve element (6) close to the pressure fluid connection (5), with an element that is movably arranged in the housing (1) and separates at least two chambers (2, 11) in the pressure fluid accumulator from each other, said element being configured as pleated bellows (3) that is movable in the housing (1) and encloses chamber (2), with said chamber (2) enclosed by the pleated bellows (3) being filled with a gas,
**characterized by** the following features:.
- a stop (13) limiting the closing stroke of the valve element (6) in the direction of the pressure fluid connection (5) is provided between the end surface of the pleated bellows (3) and the end surface of the housing (1),
- the valve element (6) is arranged in relation to the spring element (4) with play and in a relatively movable manner.

2. Pressure fluid accumulator as claimed in claim 1,
**characterized in that** the pleated bellows (3) is made of metal, and a telescopically movable accommodating member (14) is arranged at its end surface and accommodates the spring element (4) and the valve element (6) in coaxial alignment to the pressure fluid connection (5) .

3. Pressure fluid accumulator as claimed in claim 1,
**characterized in that** the accommodating member (14) is retained in form-fit at the pleated bellows (3), preferably by means of an extension (15) directed to the pressure fluid connection (5).

4. Pressure fluid accumulator as claimed in any one of the preceding claims,
**characterized in that** the spring element (4) is compressed between the accommodating member (14) and the end surface of the pleated bellows (3).

5. Pressure fluid accumulator as claimed in any one of the preceding claims,
**characterized in that** the valve element (6) is guided with a play in the accommodating member (14).

6. Pressure fluid accumulator as claimed in claim 1,
**characterized in that** the housing (1) is a deep-drawn part.

7. Pressure fluid accumulator as claimed in claim 1,
**characterized in that** the valve element (6) is designed as a seat valve, which includes a collar (17) abutting on the inside wall of the housing (1) in the valve's closed position and which includes a plunger piston (16) extending into the bore of the pressure fluid connection (5) in the valve's closed position.

8. Pressure fluid accumulator as claimed in claim 7,
**characterized in that** the collar (17) is coated with a sealing element (10) that has an annular groove (18) engaged in form-fit by the sleeve-shaped accommodating member (14).

9. Pressure fluid accumulator as claimed in any one of the preceding claims,
**characterized in that** the pleated bellows (3) is deep-drawn to the end of a bowl-type configuration having a peripheral surface that exhibits the wave contour of a pleated bellows (3), preferably by compression moulding.

## Revendications

1. Accumulateur d'agent de pression, notamment pour dispositif de freinage de véhicule automobile à régulation du glissement, comprenant un boîtier (1) comportant un raccord d'agent de pression (5), un élément de valve (6) qui ouvre ou ferme le raccord d' agent de pression (5), un élément formant ressort (4) qui est fixé à la surface frontale du soufflet (3) et qui coopère avec l'élément de valve (6) faisant face au raccord d'agent de pression (5), et un corps qui est disposé d'une manière mobile dans le boîtier (1) et sépare l'une de l'autre au moins deux chambres (2, 11) dans l'accumulateur d'agent de pression et qui est réalisé sous forme d'un soufflet (3) mobile dans le boîtier (1) et entourant une première chambre (2), la chambre (2) entourée par le soufflet (3) étant remplie d'un gaz, **caractérisé par** les particularités suivantes :
- entre la surface frontale du soufflet (3) et la surface frontale du boîtier (1), il est prévu une butée (13) qui limite la course de fermeture de l'élément de valve (6) en direction du raccord d'agent de pression (5),
- l'élément de valve (6) est disposé avec une mobilité relative et en présentant un jeu vis-à-vis de l'élément formant ressort (4).

2. Accumulateur d'agent de pression suivant la revendication 1, **caractérisé en ce que** le soufflet (3) est constitué d'un métal sur la surface frontale duquel est disposé un corps de logement (14) qui peut être déplacé d'une manière télescopique et qui sert à loger l'élément formant ressort (4) et l'élément de valve (6) suivant un alignement coaxial vis-à-vis du raccord d'agent de pression (5).

3. Accumulateur d'agent de pression suivant la revendication 1, **caractérisé en ce que** le corps de logement (14) est maintenu par complémentarité de formes sur le soufflet (3) de préférence au moyen d'une partie en saillie (15) orientée vers le raccord d'agent de pression (5).

4. Accumulateur d'agent de pression suivant l'une des revendications précédentes, **caractérisé en ce que** l'élément formant ressort (4) est serré entre le corps de logement (14) et la surface frontale du soufflet (3).

5. Accumulateur d'agent de pression suivant l'une des revendications précédentes, **caractérisé en ce que** l'élément de valve (6) est guidée en présentant un jeu dans le corps de logement (14).

6. Accumulateur d'agent de pression suivant la revendication 1, **caractérisé en ce que** le boîtier (1) est réalisé sous forme d'une pièce emboutie.

7. Accumulateur d'agent de pression suivant la revendication 1, **caractérisé en ce que** l'élément de valve (6) est réalisé sous forme d'une valve à siège qui est pourvue d'une collerette (10) prenant appui sur la paroi intérieure du boîtier (1) dans la position de fermeture de valve et qui comporte un piston-plongeur (16) s'étendant, dans la position de fermeture de valve, dans l'alésage du raccord d'agent de pression (5).

8. Accumulateur d'agent de pression suivant la revendication 7, **caractérisé en ce que** la collerette (17) est recouverte d'un élément d'étanchéité (10) qui comporte une gorge annulaire (18) dans laquelle le corps de logement (14) en forme de manchon s'accroche par complémentarité de formes.

9. Accumulateur d'agent de pression suivant l'une des revendications précédentes, **caractérisé en ce que** le soufflet (3) est réalisé, au moyen d'un procédé d'emboutissage, en formant une forme de gobelet dont la surface périphérique comporte, de préférence au moyen d'un formage par compression, le contour ondulé d'un soufflet (3).
